# EUROPEAN PATENT SPECIFICATION

(11) **EP 0 494 255 B1**
(45) Date of publication and mention of the grant of the patent: **03.06.1998**
(21) Application number: 90915550.9
(22) Date of filing: 27.09.1990
(51) Int. Cl.: G11B 7/00, G02B 21/00

(54) **POWER-MODULATED LASER DEVICES**
VERMÖGENSMODULIERTE LASERVORRICHTUNGEN
DISPOSITIFS LASERS MODULES EN PUISSANCE

(30) Priority: 29.09.1989 US 414897
(43) Date of publication of application: 15.07.1992
(73) Proprietor: THE REGENTS OF THE UNIVERSITY OF CALIFORNIA, Oakland, California 94612-3550 (US)
(72) Inventor: BEARDEN, Alan, J., Berkeley, CA 94708 (US); O'NEILL, Michael, P., Orinda, CA 94563 (US)
(74) Representative: Senior, Alan Murray
(86) International application number: PCT/US90/05499
(87) International publication number: WO 91/05336

(56) References cited:
- EP-A- 0 176 358
- GB-A- 2 152 697
- US-A- 4 630 276
- US-A- 4 689 491
- US-A- 4 760 385
- REVIEW OF SCIENTIFIC INSTRUMENTS, vol.58, no.1, January 1987, NEW YORK,US pages 45 - 53, XP31772 RUDD ET AL. 'scanning laser acoustic microscope'

## Description

### 1. Field of the Invention

The present invention relates to a power-modulated laser microscope and optical data storage devices.

### 2. References

Sarid, D., Optics Lett, 13:1057 (1988).

Clunie, D.M., et al, J. Sci Instrum, 41:489 (1964). Hansma PK, et al. Science 1988; 242: 209-216.

Introduction to Microlithography, ACS Symposium Series, (Thompson, L.F., et al, eds.) ACS (1983).

King, P.G.R., et al, U.S. Patent No. 3,409,370, issued Nov. 5, 1968.

Rugar, D., et al., Rev. Sci Instru., 59:2337 (1988).

### 3. Background of the Invention

### A. High-Resolution Microscopy

High-resolution surface mapping, in the nanometer/picometer range, can be carried out by scanning tunnelling microscopy or atomic force microscopy (Hansma). However, both of these approaches require costly, high precision equipment, and are limited to measuring static surface features.

Scanning electron microscopy (SEM), which is widely used for photographing surface features of a 3-dimensional object, has a potential surface resolution in the 10nm (10⁻⁸ meter) range. SEM, however, requires a highly sophisticated and expensive electron beam source and focusing equipment, and a static sample which must be maintained in a vacuum chamber.

It would therefore be desirable to provide a simple optical surface mapping device capable of achieving resolution down to the picometer range. It would be further desirable to achieve such resolution on a sample that can be viewed without special surface treatment or dehydration, as is required for current high-resolution surface mapping methods, and to be able to map features within a transparent structure, such as a biological cell.

### B. High-Density Optical Data Storage

Optical data discs are widely used for digital information storage. In a typical optical storage disc, information is encoded at data-storage positions on the disc in the form of two-state optical "spots" which are read as either "0" or "1". The disc is read by directing a laser beam onto the disc, at selected data-storage positions, and determining from the reflected light beam, which of the two states was seen at each location.

It will be appreciated that the density of stored information in this type of storage disc depends directly on the density of data-storage sites which can be achieved on the disc surface. The site density, in turn, is limited by the ability of the focused laser beam to resolve adjacent data-storage sites. Since a focused laser beam has a spot size of at least about 1-2 microns, the data-storage sites on a disc surface must be spaced by at least 1-2 microns.

It would be desirable to provide an optical data storage disc in which the density of information on the disc can be increased severalfold over current discs.

US 4689491, on which the precharacterising portion of appended claim 1 is based, discloses a semiconductor wafer scanning system in which a laser beam is focused to a small spot on the wafer surface and is scanned over the surface. Light reflected from the surface is monitored and an objective lens is controlled so as to vary its spacing from the surface. Since the reflected light will be at a maximum when the focal plane lies at the surface, the height of the surface, at any particular point on the surface, may be measured by determining the position of the objective lens which gives rise to the maximum reflected light.

It is a general object of the invention to meet the desired objectives stated above.

The invention includes an optical device for mapping features in a target which are related to the depth at which reflection from the target surface occurs, at a depth resolution in the picometer-to-nanometer range, comprising:
a stable-resonator laser having a resonator cavity, for use in producing an emitted coherent output light beam;
means for focusing said output beam onto the target substantially in a plane where such features are present;
means for moving the focused output beam relative to the target surface in a defined pattern;
means for measuring the power of a light beam; and
processing means operatively connected to said moving means and said measuring means for converting time- and position- dependent changes in the measured power of said light beam to position-dependent displacements in the depths at which reflection occurs on the target surface;
characterised in that
the optical device is arranged to allow coherent light reflected from the target surface to enter the laser cavity;
the measuring means is arranged to measure the power of said output beam such that, in use, the processing means converts time- and position- dependent changes in the measured power of said output beam.

In one embodiment, the device is designed to provide a mapping of both changes in reflectance and surface-normal displacements over the target. In this embodiment, the beam is moved successively to different surface regions of the target, and at each region, the target is moved along the beam axis until maximum and minimum laser power levels are observed. The difference between the two levels is then used to determine a reflectance value for that region. This information is used to map the reflectance characteristics over the target surface, and further used to subtract out reflectance effects from surface displacement effects, for producing a surface map that depends only on surface displacement effects.

In another aspect, the invention includes an optical data storage system comprising the device in conjunction with a disc having a substrate which defines a plurality of data-storage positions. Multiple-bit information is stored at each data-storage position by a structure adapted to reflect a focused coherent light beam directed against the disc surface at one of I = 2^{N} selected submicron displacement distances above or below a defined disc surface, corresponding to one of a selected I = 2^{N} information states, where I > 2.

The substrate of a disk may carry one and preferably multiple transparent layers, each having a thickness between about 1-10 microns. Each layer defines one of I = 2^{N} submicron depths at which reflecting structure can be located, for each data-storage position, for reflecting focused coherent light from that depth at that position.

A photodetector in the device is used to measure the power output of the laser, and the time-dependent changes in the measured power of the output beam are converted to position-dependent displacement distances at the selected data-storage sites, for determining the selected one of the I = 2^{N} states stored at each such site.

These and other objects and features of the invention will become more fully apparent when the following detailed description of the invention is read in conjunction with the accompanying drawings.

### Brief Description of the Drawings

Figure 1 is a simplified schematic view of a microscope constructed according to one embodiment of the invention;
Figure 2 is a simplified schematic view of a microscope constructed according to another embodiment of the invention;
Figure 3 is an enlarged plan view of a multi-cell photodetector which may be used in the microscope of the invention;
Figure 4 shows spectra of laser power variations produced by target surface vibrations, as measured at several vibration amplitudes, indicated at the left of the spectra in manometers, and over vibrational frequencies between 200-2200 Hz;
Figure 5 shows a plot of peak power fluctuation at a fixed frequency, as a function of increasing peak amplitudes of vibration;
Figure 6 shows a theory parameter diagram of an experimental configuration used for measuring laser power output as a function of displacement of a piezoelectric transducer;
Figure 7 is a plot of laser power amplitude as a function of oscillation amplitude of a target (light line) and calculated from theory (dark line);
Figure 8 is a fragmentary perspective view of a surface which is to be mapped by the microscope of the invention;
Figure 9 is a flow diagram of surface mapping steps employed in one embodiment of the microscope of the invention, for mapping both surface reflectance and surface displacements;
Figure 10 is a simplified schematic view of a data-storage device constructed according to the invention;
Figure 11 is an enlarged, fragmentary portion of a data-storage disc;
Figure 12 is a sectional view of the Figure-11 disc, taken generally along line 12-12 in Figure 11;
Figures 13A-13F illustrate steps for producing a data-storage disc;
Figures 14A-14E illustrate steps for producing a data-storage disc like the one shown in Figure 13F, according to a different construction method;
Figures 15A-15D illustrate steps for producing a data-storage disc;
Figure 16 is a plot showing the thickness in a photoresist layer, after development, as a function of log dose irradiation applied to the layer; and
Figures 17A-17C illustrate steps for producing a data-storage disc;
Figure 18 illustrates a multi-layer optical data-storage disc.

### Detailed Description of the Invention

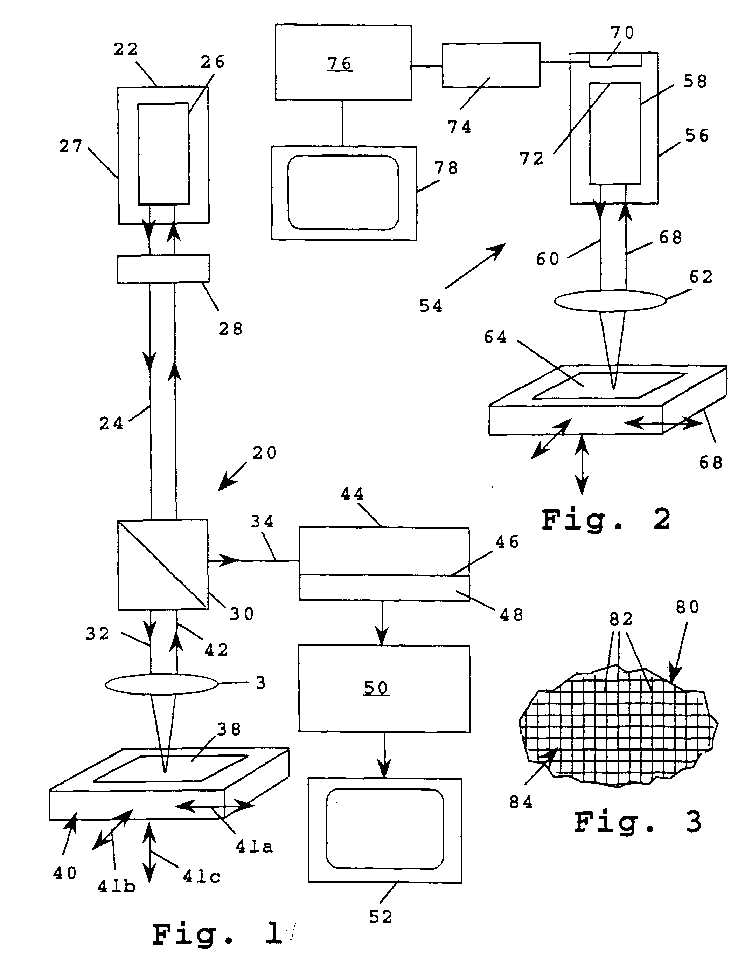

I. Optical Microscope for High-Resolution Surface Mapping Microscope Construction. Figure 1 is a schematic diagram of a high-resolution optical microscope 20 constructed according to one embodiment of the invention. The microscope generally includes a stable-resonator laser 22 designed to produce a coherent light beam 24. The laser, which may be of conventional design, includes a resonator cavity 26 within a housing 27, and internal optical and circuit features (not shown).

One preferred type of laser is a low-power He-Ne gas laser operating in two longitudinal modes, each of which is linearly polarized. An internal linear polarizer blocks the passage of one of the two modes, so that only a single linearly polarized low-power beam is available externally. One laser of this type which is suitable commercially available is a Uniphase Model 1101P He-Ne single-mode gas laser (Uniphase, San Jose, CA). Where it is desired to perform target mapping at target vibrations in the MHz range, as described below, a semiconductor laser, such as are commercially available, may be used.

In the present embodiment, where the laser output is linearly polarized, the beam is passed through a half-wave plate 28 which allows the direction of linear polarization to be rotated in a plane perpendicular to the output beam. This effect can also be achieved by rotating the laser itself. Following the half-wave plate, the beam is split by a polarization-dependent beam splitter 30 which passes the component of linear polarization parallel to the plane of incidence straight through, and deflects by 90° light whose linear polarization is normal to the plane of incidence. The portion of the laser output beam which is passed through the beam splitter is also referred to herein as an incident beam, and is indicated at 32 in Figure 1. The portion of the laser output beam which is deflected by the beam splitter is also referred to herein as a secondary beam, and is indicated at 34 in the figure.

An adjustable-position objective lens 36 in the microscope is used to focus beam 32 onto a target 38 whose features are to be mapped, in accordance with the invention. The lens is preferably a 10 to 100 power lens having a numerical aperture between about 0.6 and 1.2. The focused beam preferably has a beam diameter of between about 0.5 and 2 microns at the focal point of the lens, and the depth of focus of the beam is preferably between about 1-2 microns. The lens is also referred to herein as means for focusing the laser output beam onto a target.

The target is supported on a movable stage 40 designed for moving the target in a manner which allows the focused light beam to "scan" the target. That is, the target is moved in a systematic, preferably time-dependent manner in the x-y plane (the plane normal to the beam axis) which brings each region of the target to be viewed into the focused beam. The stage is also designed for small-displacement oscillation or slow displacement in the z direction, i.e., the direction of the beam.

In the embodiment shown, the stage is moved by x, y, and z micrometer heads, indicated by arrows 41a, 41b, and 41c, respectively. These heads can be controlled by a DC voltage input, according to standard operation.

Alternatively controlled movement of the stage can be performed by piezoelectric transducers, such as indicated also by arrows 41a, 41b, and 41c, which may be driven for slow controlled movement in a selected x, y, or z direction by a DC input, and which may be driven by an AC signal for oscillation in a desired direction and at a selected frequency. In one preferred operating mode, the target is vibrated in the z direction by a piezoelectric transducer (indicated by arrow 41a) at a selected frequency in the KHz-MHz range. The amplitude of vibration is preferably less than 100 nm. The purpose of the vibration is to avoid the problem of 1/f DC power noise, by recording fluctuations in laser power output on a high-frequency AC "carrier," as seen below.

The stage and the movement effectors indicated by arrows 41a, 41b, and 41c are also referred to herein, collectively, as means for moving the focused beam relative to the target in a defined pattern. It will be appreciated that the moving means could alternatively include a movable lens assembly for scanning the beam over the target in a defined pattern, according to known lens assembly construction and operation.

When the incident beam strikes the target, a coherent reflected light beam 42 is reflected by the target back along the path of the incident light beam. (The incident and back reflected beams, which are coincident light beams, are shown as separate lines in Figure 1 only for the sake of clarity.) This back-reflected beam is transmitted by the beam-splitter and reenters the optical resonator cavity of the laser, as indicated in the figure. The light that reenters the cavity interferes with the standing wave distribution of light in the cavity, and this interference, which depend on the phase of the back-reflected light, changes the output intensity of the laser. The general phenomenon of phase-modulated laser output has been reported (King, Clunie).

The phase of the reflected light beam varies according to displacements, along the beam axis, between the laser and the region in the target at which reflection is produced. These regions of reflection may correspond to reflecting regions on the target surface, or they may correspond to subsurface features, below a transparent surface, where a change of index of refraction produces light reflection. Such displacements can be measured in the picometer/nanometer range, and more specifically in the range from about 1 picometer (10⁻¹² meters) up to about one-fourth of the laser beam wavelength, that is, up to about one hundred nanometers (10⁻⁷ to 10⁻⁶ meters, nm). Even greater resolution, down to about 0.1 picometer, is theoretically possible by limiting laser fluctuation noise, detector noise, and apparatus vibrational effects, as noted below.

The retroreflected light beam 42 which enters the laser cavity is preferably only a small portion of the incident beam, typically about 0.1% or less of the total incident-beam power. This level is achieved, generally, when the target gives non-specular reflection. For a target which gives specular reflection, the level of retroreflected light can be reduced to a desired low level, in one approach, by tilting the plane of the target, so that the back reflected light beam which enters the laser, i.e., the retroreflected light beam, represents diffuse reflection from the surface. Alternatively, the back reflected light beam may be passed through a half-wave plate and beam-splitter or through a neutral density filter before reaching the laser, to produce the desired power attenuation in the retroreflected beam.

The secondary beam from the laser is directed onto a photodetector 44 designed to measure the power of the laser output beam, by measuring the power of the deflected, secondary beam. The photodetector includes a silicon photodiode 46 which is designed to measure light intensity. One suitable type of photodiode is an EG&G SGD 100-A silicon photodiode.

The photodiode is connected to an operational amplifier 48 in the photodetector which outputs a DC component voltage which is linearly proportional to the power of the light beam detected by the photodiode. The operational amplifier characteristics are such that the voltage signal output which is typically obtained is in the microvolt/millivolt range. The photodetector is also referred to herein as means for measuring the power output of the laser output signal.

The microscope also includes a processing unit 50 for converting position-dependent changes in the power output measured at the photodetector, as the beam is scanned over the target, to position-dependent displacement information. To this end, the unit records the laser power (photodetector voltage) as the focused laser beam is scanned over the target, associates each measured power with the corresponding region of the target which produced that power, then assigns that target region a given displacement value, according to the measured laser power. From this data, a displacement map of reflecting regions of the target is constructed, for display at a suitable display device 52 in the microscope.

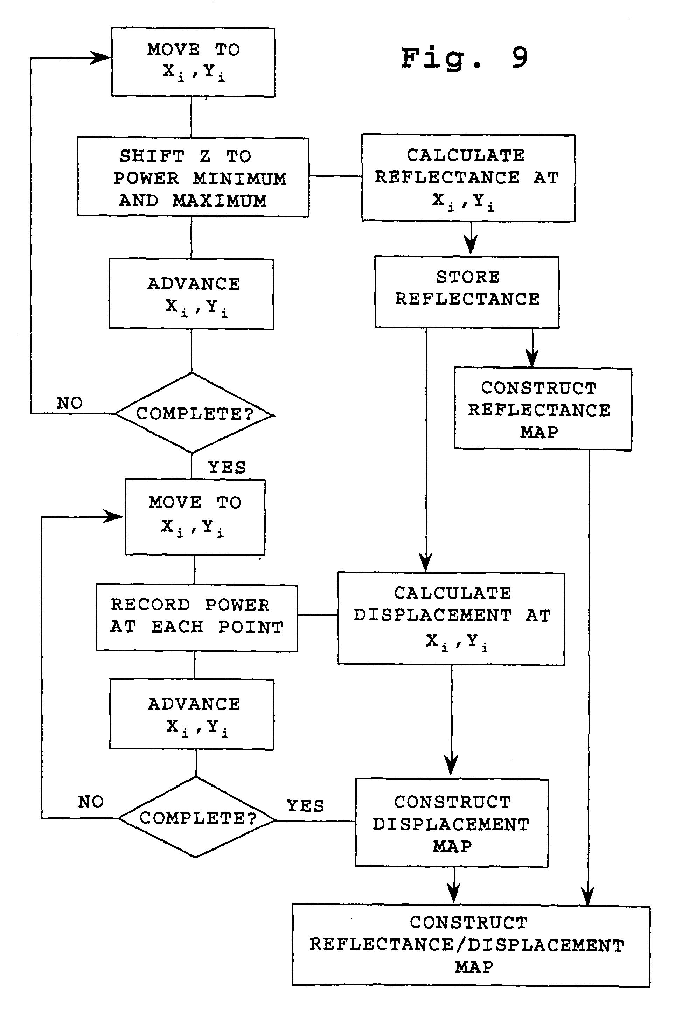

The operation of the unit 50 will be described below with reference to Figure 9. As will be seen, the microscope can be operated in a mode in which both displacement and reflectance maps of the target can be constructed from the laser power output information which is recorded at unit 50.

Figure 2 illustrates a microscope 54 constructed according to a second embodiment of the invention. The microscope includes a laser 56 having a cavity 58, for producing a coherent output beam 60, and an adjustable-position lens 62 for focusing the beam on a target 64, carried on a movable stage 66. The laser, lens, and stage components are similar to those described above. A back-reflected light beam 68 from the target is directed into the laser cavity, to modulate laser power output as described above.

Microscope 54 differs from microscope 20 in that the power output of the laser is measured directly from the laser cavity. To this end, a photodetector 70 is positioned behind the rear of the cavity, as shown, for measuring the intensity of light leaking through a mirror 72 at the rear of the cavity. The photodetector is also referred to herein as means for measuring the power output of the laser.

The photodetector signal is amplified by an amplifier 74, and the amplified signal is passed to a processing unit 76 operable to convert position-dependent changes in laser output, as the focused laser beam is scanned over the surface, to position-dependent displacements of the reflecting regions of the target, as described above. A displacement map of target reflecting regions constructed from this data may be displayed on a display device 78.

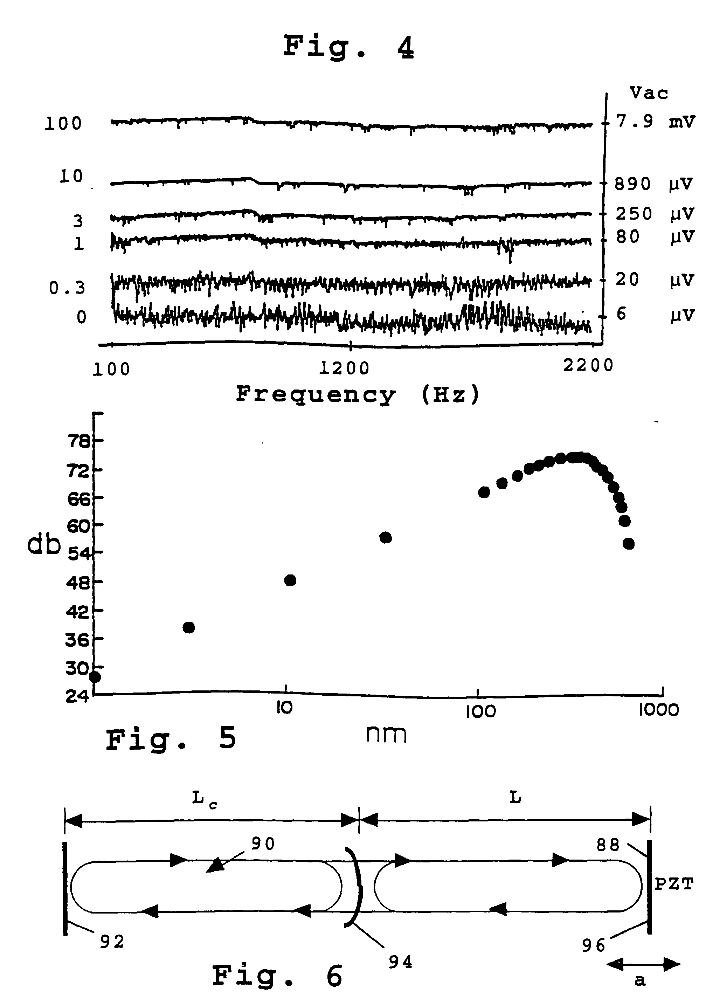

Figure 3 shows a fragmentary portion of a photodetector 80 which may be used in either of the above microscope embodiments, for measuring power or intensity characteristics of different regions of the laser output beam. The detector has a grid or matrix of photodetector elements, such as elements 82, which collectively define a detecting surface 84 corresponding approximately to the area of the output laser beam being detected. It will be appreciated that the grid of detector elements can detect power variations within the cross-section of the beam, if desired.

Surface Mapping Resolution. Figure 4 illustrates the ability of the microscope of the invention to detect surface displacements in the direction normal to the surface. The target here is attached to a commercially available piezoelectric transducer (PZT) having a response of about 4.4 nm displacement/V. A stiff paper card was attached to the surface of the transducer to serve as the vibrating target surface. Voltages from a sine-wave oscillator (10 Hz to 20 kHz) or the synchronized sweep frequency output from an audio spectrum analyzer (Hewlett-Packard 3580A) were used to drive the transducer directly or through an amplifier for the larger motional amplitude ranges.

The PZT vibration amplitude is shown at the left axis in Figure 4, and the corresponding power output in voltage units, along the right axis. For each voltage applied to the transducer the frequency was swept or varied from 200Hz to 2.2kHz. The flatness of the traces indicates the flat response of the piezoelectric over the range of driving frequency.

It can be appreciated from the spectra shown in Figure 4 that the amplitude of the measured signals is linearly related to the amplitude of the transducer vibrations. For example, with reference to the two spectra at the top in Figure 4, a tenfold increase in vibration amplitude (from 10 to 100 nm) corresponds to an approximately ten-fold increase in detected laser output measured as a voltage; similarly, a 100-fold increase in vibration amplitude yields an approximately 100-fold increase in measured voltage. The noise in the spectra for vibration amplitudes below 1 nm is due to background electronic noise and random laser light beam output variations. Similar results were obtained when the target surface was a transducer covered with brushed steel, plastic, and mylar.

The signal-to-noise ratio as monitored by the output of the operational amplifier is due to laser-light intensity fluctuations and electronic noise in the photodetector. The exact noise voltage at the output of the current-to-voltage electronics depends on the specific laser's amplitude fluctuations, the detector and its associate circuitry, and on the bandwidth of the measurement. For the bandwidth of the circuit used, the noise voltage was 2 microvolts, giving a signal-to-noise ratio of at least 40 dB.

In the method described above, displacement measurements down to the 10 picometer range have been made. The limiting noise in the apparatus is due predominantly to laser amplitude fluctuations, which in theory can be reduced by up to two orders of magnitude. It is also noted that detector noise levels down to 10⁻² pm/(Hz)^{-1/2} have been reported (Rugar et al.). Thus, assuming that mechanical vibrations in the microscope can be reduced sufficiently, the microscope should be able to detect position-dependent surface displacements down to the 0.1-1 picometer range, particularly by employing phase-lock or time-averaging signal-to-noise improvement techniques.

The range of linearity with respect to amplitude can be determined by keeping the frequency constant as the amplitude is varied and plotting the power output (voltage) vs. amplitude as in Figure 5. The linear relationship holds over a range of vibration amplitudes extending below about one quarter of the incident light's wavelength. For vibration amplitudes greater than this upper limit, the relationship becomes non-linear. However, as seen below, the relationship between vibration amplitude and measured laser power output in the high-amplitude range is still predictable, and therefore useful in determining large-amplitude displacements from the measured power output fluctuations of the laser. For a He-Ne laser, the wavelength of emitted light is 632 nanometers; thus, the range of linearity (taking background noise into consideration) extends up to about 150 nm.

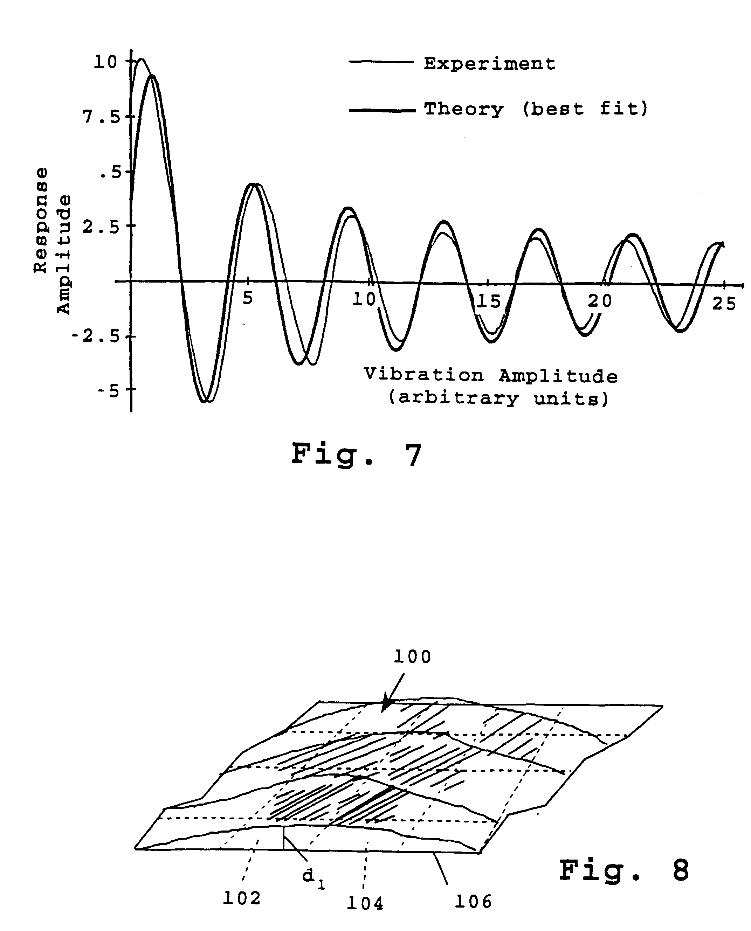

Figure 6 is a theory parameter diagram of an experimental configuration used for measuring laser power output as a function of displacement of a piezoelectric transducer (PZT) 88. Here L_{c} represents the length of the laser cavity 90, defined by the two mirrors 92 and 94, and L represents the distance between mirror 94 and a reflecting surface 96 carried on the PZT. Experimentally, the PZT was placed 20 cm from the laser exit, port, and was driven by a DC signal from a PZT high-voltage amplifier, or a 40 Hz AC sine wave signal coupled to the amplifier. A silicon photodetector (not shown) was operated in the photovoltaic mode so that its voltage output was linearly proportional to the light intensity input. The detector was positioned at the rear of the laser head where a hole had been drilled to allow light to escape from the approximately 99% reflecting back mirror. The voltage signal from the photodetector was sent either directly to an x-y recorder for plotting of the laser intensity DC variation or to the recorder via a phase sensitive lock-in amplifier for plotting the magnitude of the AC variation.

In a first study, the surface of the PZT was moved slowly towards the laser (i.e. L decreased) and the output of the photodetector was observed. The voltage output was a DC signal with sinusoidal variation. The sinusoid went through one period as the PZT moved one half-wavelength of the laser light (316.4 nm). This behavior was observed for three different surfaces: the polished surface of a silicon chip, the rough backside of that chip, and the brushed stainless steel surface of the PZT. The amplitudes of the sinusoid as a percentage of the total signal from the photodetector were 47%, 1.3% and 0.3% respectively, for the three surfaces.

In a second study, the PZT was oscillated about a distance L with a fixed amplitude and frequency while L was slowly decreased. The output of the amplifier, at the oscillation frequency of the PZT (40 Hz) showed a sinusoidal variation with full period corresponding to movement of the PZT of a half-wavelength toward the laser. For the above-mentioned three surfaces, the signal strengths as a percentage of the average signal from the PD were 13%, 0.13%, and 0.25%, respectively, and 0.04% for the surface of a stiff paper card.

In a third study, the amplitude of the oscillation over a range of approximately 3 wavelengths (1.9 µm) was varied, at a fixed frequency and fixed L. The amplitude of the signal from the amplifier, as a function of PZT vibration amplitude is shown in light line in Figure 7. The response amplitude shows a Bessel function behavior (solid line), as predicted from laser resonant cavity analysis carried out by the inventors (not shown).

Surface Reflectance Effects. As indicated above, a variety of surfaces having different roughnesses and reflectances were examined for displacement effects using the microscope of the invention. One interesting finding is that even surfaces with high surface roughness, such as a file card, which may have a surface roughness corresponding to several wavelengths, give measurable displacement effects in the nm or lower range.

One explanation of this phenomenon is that the resonance modulation effect due to the phase of back reflected light is responsive to a weighted average of the wavelets produced by reflection from othe various reflecting planes in the target region. The phenomenon represents an important aspect of the invention, since it allows for high-resolution displacement measurements on target surfaces with a wide range of surface roughnesses.

The reflectance of a surface, does, however, effect the amplitude of the laser output response to displacements at the surface. In the third study reported above, it was found that by placing calibrated neutral-density filters between the laser output and the reflecting surface, the peak signal varied as the square root of the reflectivity.

Thus, at least within a wide range of reflectivities, the contribution of reflectance to the laser output level can be approximated from some determinable function, such as a function which approximates laser response as a square root of reflectivity. This function in turn can be used to determine reflectivity of a target surface, by determining the amplitude of laser power response, over a quarter wavelength (between a maximum and minimum power response).

Surface Mapping Method. Figure 8 shows a portion of a target 100 which has been partitioned into a grid of regions, such as regions 102, 104, which correspond in area approximately to the size of the focused laser beam used in examining the target. Each region has a reflection surface which is displaced some given distance, such as d₁ in region 102, above a reference plane, indicated at 106. In addition, the reflectance of the target surface may vary from region to region, as indicated by the different levels of shading in the figure.

Figure 9 is a flow diagram of one operating mode of the microscope, for use in mapping both surface displacements and reflectance, such as in target 100. Initially, the focused beam is placed at a region xᵢ, yᵢ, such as region 102, in the figure. The target stage is then shifted at least 1/4 wavelength along the z axis until minimum and maximum laser power levels are recorded. This shifting may be effected by a DC input into an electrically driven micrometer head or piezoelectric transducer, or by a piezoelectric transducer rapidly vibrating at a 1/4 wavelength amplitude. As discussed above, the measured amplitude difference at minimum and maximum laser power outputs can be used to determine the reflectance from that region, according to a predetermined relationship between amplitude of power output variation and reflectance. This difference value is stored in a buffer, for later use in constructing a reflectance map of the target and/or for correcting displacement measurements for differences in surface reflectance.

The stage is now moved to an adjacent region, e.g., Xᵢ₊₁, Yᵢ, and the procedure for determining the reflectance value at this new region is repeated, and the reflectance value is stored in the above buffer. The procedure is repeated until the entire target has been scanned. From the reflectance values which are calculated from each region, the processing unit in the microscope, such as unit 50 in microscope 20, generates a target reflectance map.

For displacement measurements, the stage is preferably oscillated at a selected frequency about a fixed distance Zₒ from the laser, where the amplitude of oscillation is substantially less than the expected target displacements which are to be measured. The stage is now moved in the x-y plane to scan the focused beam over each region. At each region, the laser power level is measured, and an appropriate correction for measured reflectance at that region is applied to determine displacement with respect to the reference plane, such as plane 106 in Figure 8. The corrected displacement value is stored in a buffer, as indicated.

From the displacement values which are calculated from each region, the processing unit in the microscope, such as unit 50 in microscope 20, generates a target displacement map. The reflectance and displacements values determined for each region can be combined into a single surface map.

It can be appreciated from the foregoing how various advantages and features of the invention are met. The microscope provides high resolution (down to the low picometer range) in an optical system, and thus avoids special sample coating and/or dehydration procedures required in electron tunnelling or scanning electron microscopes. This allows a variety of samples, such as living cells, to be examined at high resolution.

The microscope is able to map surface displacement features in a target having a reflecting surface, or subsurface reflecting features in a target having a transparent surface. In addition, and according to an important advantage of the invention, the microscope can make accurate distance displacement measurements, in the picometer to nanometer range, on surfaces whose roughness may encompass several wavelengths variation. The microscope can obtain surface (or subsurface) reflectance information, and this can be used for constructing surface reflectance maps and correct the displacement map data.

### II. Optical Data Storage Device and Disc

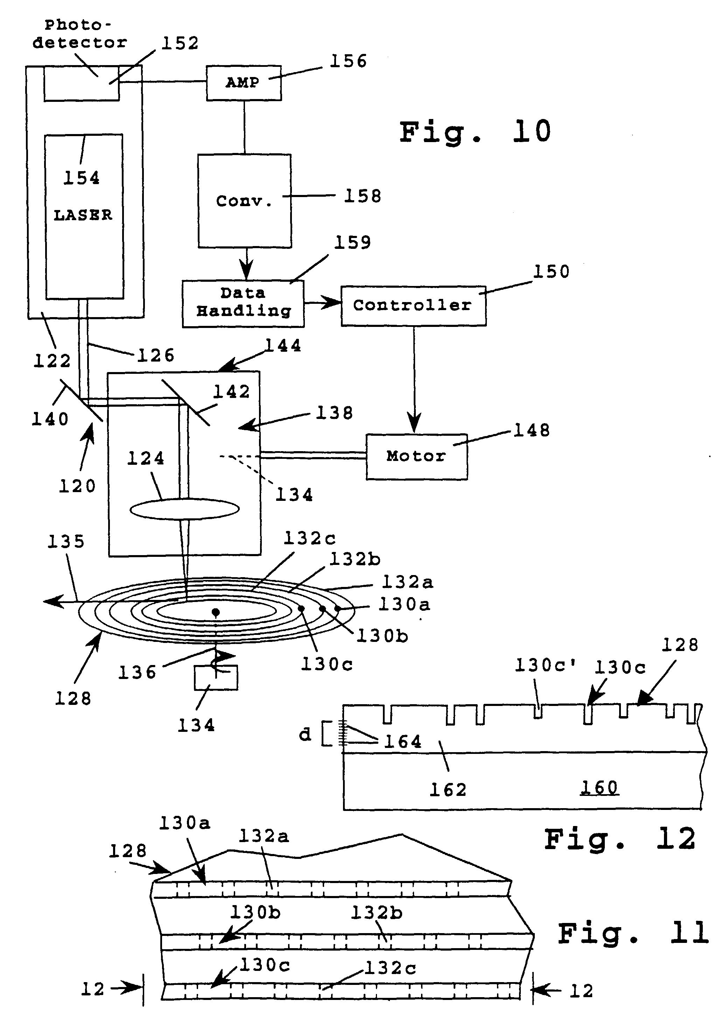

Data-Storage Device. Figure 10 is a schematic view of a portion of an optical data-storage apparatus or device 120 constructed according to another embodiment of the invention. The apparatus includes a stable-resonator laser 122 and an adjustable-focus objective lens 124 for focusing the laser output beam, indicated at 126, onto the surface of a data-storage disc 128.

The focused beam preferably has a beam diameter of between about 0.5-2 microns at the focal point of the lens, and the depth of focus of the beam is preferably between about 1-2 microns.

The construction and characteristics of the disc will be described below. For present purposes, it is noted that the surface of the disc defines a plurality of data-storage positions, such as indicated at 130a, 130b, and 130c which are located within concentric tracks 132a, 132b, 132c, respectively, on the disc surface. At each data-storage positon, information is stored in the form of a reflective region having a selected displacement distance above or below a defined surface plane in the disc. The number of different displacement distances is I = 2^{N}, where I is greater than 2 and preferably 3 to 8 or more. That is, the disc stores I = 2^{N} information states at each data-storage position.

The disc is mounted on rotary motor 134 in the device for rotation, at a selected speed about the disc axis, indicated at 136, according to conventional disc drive construction.

An optical assembly 138 in the device is designed for shifting the position of the focused beam to different selected tracks on the data disc. The assembly includes lens 124 and pair of mirrors 140, 142 interposed between the laser and lens for directing the beam along a selected-length horizontal path in the figure. Mirror 142 and lens 124 are carried on a lens carriage 144. The carriage is shiftable, along a horizontal axis 134 in the figure, corresponding to a radial line 135 on the surface of the disc, to position the focused beam at selected tracks on the disc.

Shifting in the optical assembly is performed by a motor 148 which is operably connected to the carriage, and designed to shift the beam in selected increments, e.g., 0.05 to 0.2 mm, corresponding to the radial spacing between adjacent tracks on the disc. The increment of shifting is also adjusted to preserve the phase relationship between the output beam and the beam reflected from the disc back into the laser. This is achieved by making the increments of shifting, and therefore the spacing between adjacent tracks on the disc, equal to an integral number of wavelengths of the coherent laser beam. The position of the optical assembly is under the control of a controller 150 which instructs the motor to selected track positions on the disc, according to well-known disc drive construction.

The power of the laser output is measured, as in the Figure 2 microscope, by a photodetector 152 placed behind the optical cavity of the laser, for receiving light from the cavity through the rear mirror of the cavity and an opening 154 formed in the rear of the housing. An amplifier 156 used to amplify the photodetector signal is connected to a signal converter 158 which operates to convert time-dependent amplitude changes in the voltage signal received from the photodetector to binary data values at each of the selected disc locations which was "read". The construction and operation of the converter will be apparent to those skilled in the art. The data information from the converter is supplied to a data-handling device 159, such as a microprocessor, which in turn can provide signals to controller 150 for accessing information from the disc.

In operation, the laser beam in the device is focused onto the surface of a data disc, at a selected track in the disc. As the disc rotates, each data-storage position is seen by the laser beam as one of I = 2^{N} surface displacements above or below a defined reference plane. These surface displacements, in turn, produce a change in the phase of the light reflected back into the laser, causing a proportional change in the power output of the laser. The time-dependent changes in power are converted by converter 158 to time-dependent displacements read on the disc, and these are associated with given addresses on the disc according to known, methods.

It will be appreciated that each data-storage position represents a selected one of I = 2^{N} information states. Since the density of data-storage positions on the disc can be made substantially as high as in conventional discs (where 2 information states only are stored at any storage position), the density of information on the disc, and the speed with which information can be accessed from the disc is enhanced by a factor of up to N = log₂ I.

Data-Storage Disc. Figure 11 shows an enlarged fragmentary plan view of the surface of a data storage disc, such as disc 128.

Tracks, such as tracks 132a, 132b, and 132c in the disc are indicated by solid lines, and data-storage positions, such as positions 130a, 130b, and 130c, are indicated by dotted lines. The data-storage positions on each track are spaced from one another by a distance preferably between about 1 and 5 microns, and adjacent tracks have a spacing between about 1 and 5 microns. The disc may be further encoded with radial and disc-angle information, for determining disc position, and with track-position information, to insure proper beam placement with respect to any selected track, according to a conventional optical data disc construction.

Figure 12 shows an enlarged fragmentary cross-sectional view of disc 128, taken generally along line 12-12 in Figure 11, i.e., along track 132c. The disc includes a substrate 160 which may be any suitable, preferably rigid disc material, such as aluminum, glass, or the like. The substrate supports a layer 162 whose outer surface defines the data-storage locations on the disc. The thickness of the layer defines the I = 2^{N} different displacement distances, or thicknesses corresponding to a selected one of I = 2^{N} information states which can be stored at each data-storage location.

For purposes of simplicity, the discs illustrated herein have 8 (2³) defined displacement distances, which may include the surface plane of layer 162 and 7 increasing depths below the surface, or 8 subsurface depths. The different displacement distances Yd are indicated by depth markings, such as markings 164, shown at the left in Figure 12 and related figures which follow. Thus, for example, the data stored at position 130c corresponds to a depth 5d, and the data stored at position 130c', to a depth 7d.

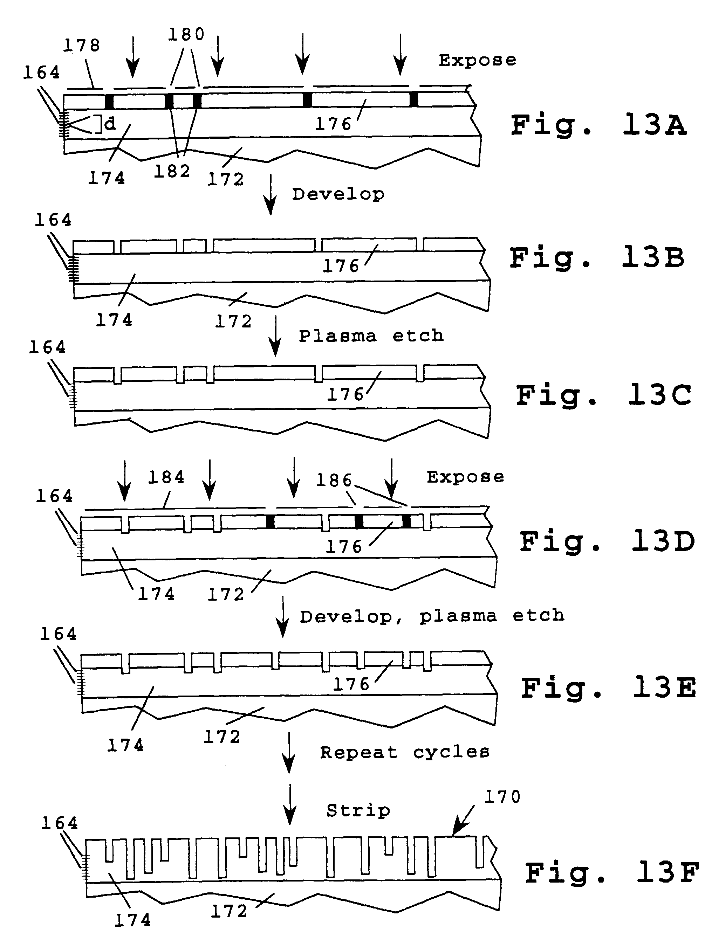

Figures 13A-13F shows one method of forming a disc 170 (Figure 13F) of the type described. Initially a substrate 172 is coated with an etchable layer 174, such as a silicon layer, using known coating methods. Layer 174, which has a preferred thickness of at least 2 microns, is coated with a photoresist coat 176, for example, by spin coating to a desired thickness, for example, 1-5 microns. Depth markings in the layer, such as markings 164, are indicated at 164 in the figures.

The coated disc is covered with a mask 178 whose openings, such as openings 180, correspond to the positions of the data-storage positions which are to have the greatest depth, Id, where I = 2^{N}. The masked photoresist coat is exposed to UV light, producing exposed regions, such as regions 182 in the resist coat (Figure 13A), and these regions are removed by development (Figure 13B), according to known photolithographic methods (e.g., Thompson). The disc surface is then plasma etched for a selected period sufficient to etch the uncovered regions of layer 174 to a depth d, corresponding to the distance between the outer surface of layer 174 and the first depth marking.

The disc is then covered with a second mask 184 whose openings, such as openings 186, correspond to the positions of the data-storage positions which are to have the next-greatest depth (I-1)d (Figure 13D). The masked photoresist coat is exposed to UV light, these regions are removed by development, and the coated substrate is plasma etched under the previously selected conditions. This second plasma etch step is effective to etch the just-uncovered regions of layer 174 to a selected depth d, and the already-uncovered regions to a depth approximately equal to 2d (Figure 13E).

With each repeated cycle, new regions of the layer are uncovered and etched to a depth d, and previously uncovered regions are etched an additional increment d in depth. After I = 2^{N} cycles, e.g., 8 cycles, all of the data-storage positions have been etched to a selected depth, and the photoresist layer is removed by stripping. As seen, the resulting disc 170 is composed of an underlying substrate and an outer layer defining plural data-storage positions, each with a selected one of I = 2^{N} depths below the surface of the layer.

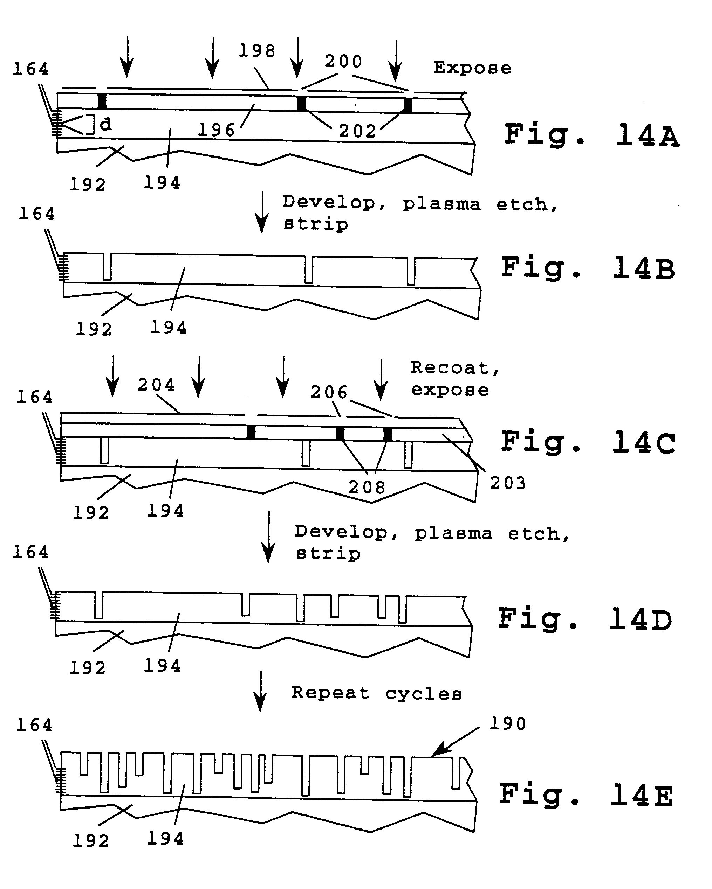

Figures 14A-14B illustrate another method for forming a data-storage disc 190 (Figure 14E) of the type described above. Here a substrate 192 having an etchable layer 194 is coated with a suitable photoresist layer 196, as above. The resist layer is exposed to UV light through a mask 198 whose openings, such as openings 200, correspond to the data-storage positions which are to have the greatest depth, Id. The light-exposed regions, such as regions 202, are removed by development (Figure 14A), as above, and the disc is chemical-etched or plasma-etched until the uncovered regions of layer are etched to a selected depth Id (Figure 14B).

The substrate is then stripped, coated with a second coat 203, and this coat is exposed to UV, using a second mask 204 whose openings, such as openings 206, correspond to the data-storage positions which are to have the next-greatest, (I-1)d depth. The light-exposed regions, such as regions 208, are removed by development and the disc is chemical-etched or plasma-etched until the uncovered regions of layer are etched to a selected depth of (I-1)d (Figure 14D).

With each step, a new pattern of data-storage positions With progressively shallower etch regions is created, until after I = 2^{N} steps, a desired disc 190 composed of an underlying substrate and an outer layer defining plural data-storage positions, each with a selected one of I = 2^{N} depths below the surface of the layer, is formed (Figure 14E).

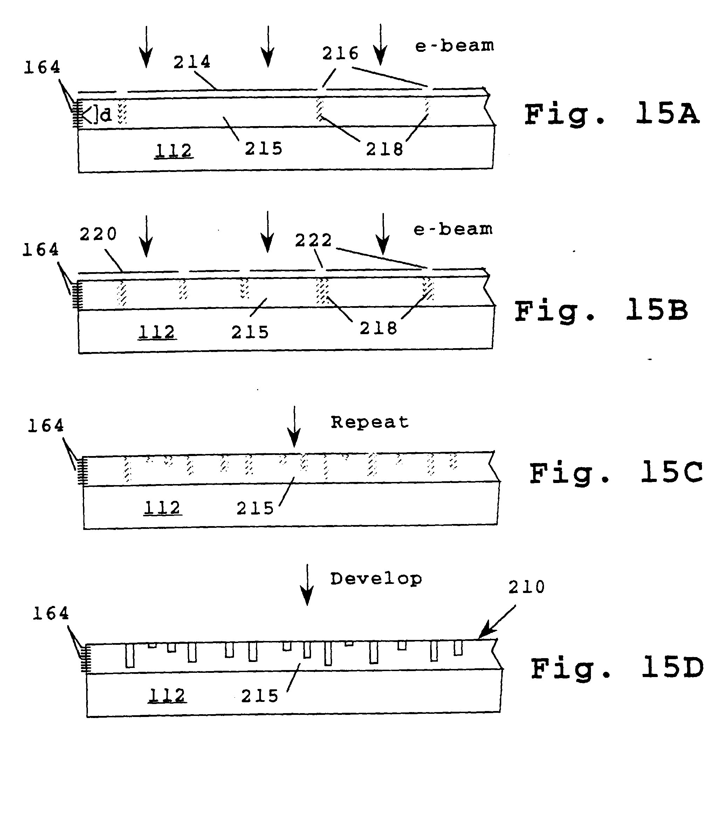

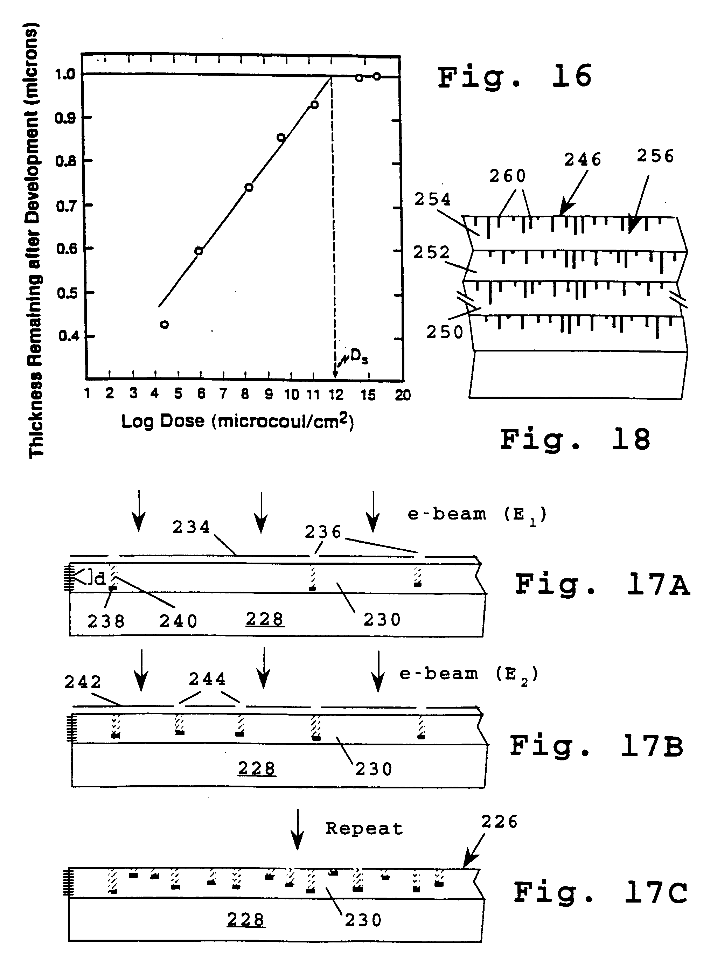

Figures 15A-15D illustrate a method of forming a disc 21C (Figure 15D), based on the ability to control the depth of removal of material from a photoresist coat, according to the dose or radiation applied to the coat. Figure 16 shows a plot of coat thickness remaining after development in a positive-tone electron-beam resist coat, as a function of total e-beam dose (in microcoul/cm²) applied to the coat (plot from Thompkins, p. 105). As seen, the thickness remaining in the coat after development is a well-defined linear function of log dose, up to a saturation dose of about 10¹² microcoul/cm².

In preparing the disc, a substrate 112 is coated with a positive-tone e-beam resist coat 115 (Thompkins) having a preferred thickness of 2 or more microns. The resist layer is then covered with a mask 214 whose openings, such as openings 216, correspond to the data-storage positions which are to have the greatest depth, and the coat is irradiated with an electron beam (3-beam) for a period corresponding to a desired depth of coat removal, i.e., corresponding to a selected dose. The effective irradiation depth is indicated in coat 215 by shaded regions, such as regions 218, in Figure 15A.

The first mask is then replaced with second mask 220 whose openings, such as openings 222, correspond to the data-storage positions which are to have the next-greatest depth. The coat is now irradiated with an e-beam for a period corresponding to the new selected depth of coat removal, as indicated by regions 224 in Figure 15B.

This procedure is repeated for data-storage positions at each of the selected I = 2^{N} depths, as shown in Figure 15C. After all I = 2^{N} irradiation steps, the irradiated coat is developed to remove cavities in the coat corresponding in depth to the selected irradiation doses, as shown in Figure 15C. After baking, to remove developing solvent from the resist coat, the coat may be covered with a transparent protective coat.

Figures 17A-17C illustrate a method of forming a data storage disc 226 in which the regions of reflection in a disc surface are provided by changes in the index of refraction at selected data-storage positions and selected depths within a uniform-thickness layer. The disc shown in the figures is composed of a substrate 228 coated with a layer 230, preferably about 2 microns thick. Layer 230 is formed of a transparent polymer, such as polyethylene, whose index of refraction can be selectively varied, in localized regions of the layer, according to the degree of polymerization at the localized regions.

Layer 230 is initially covered with a mask 234 whose openings, such as openings 236, correspond to the data-storage positions which are to have the greatest depth Id, and the coat is irradiated with an e-beam whose energy is calibrated to penetrate the layer to a depth Id, producing a localized change in index of refraction at that depth. The area of localized change in index of refraction is shown by solid line, such as line 238, at the bottom of an irradiated region, such as region 240.

The first mask is then replaced by a second mask 242 whose openings correspond to the data-storage positions where index of refraction changes are to have the next-greatest depth (I-1)d. The layer is now irradiated with an e-beam whose energy is calibrated to penetrate the layer to the next-up selected depth, producing index of refraction changes at that depth at the mask open positions, as shown in Figure 17B. These steps are repeated until index of refraction changes at each of the I = 2^{N} depths is achieved (Figure 17C).

This data storage disc can be constructed to include two or more transparent layers in a stacked configuration, as illustrated in Figure 18. Here a stacked-disc device 246 is composed of a substrate 248 and a series of stacked layers, such as layers 250, 252, and 254, each. constructed according to one of the single-layer embodiments described above. That is, each layer, such as layer 254, has a surface region 256 which defines a plurality of data-storage positions, such as positions 260, and data is stored at each region in the form of a depth (or height) which is a selected of I = 2^{N} displacement distances below (or above) the surface plane of the layer. Each layer has a preferred thickness of between about 10-50 microns, and the disc may contain up to several hundred layers.

In a data-storage device which uses a multi-layer disc of this type, the plane of focus of the coherent light beam is shifted for "reading" a selected layer by suitable lens shifting means.

As an example of the increased data-storage density which can be achieved in the stacked disc, the adjustable position objective lens will be assumed to be a 100X microscope objective lens having a NA value of 0.6. This lens has a focal plane depth of 10µ. Such an objective will distinguish layers of holes spaced 20µ apart. A medium having an index of refraction of 0.01 would provide 0.1% retroreflected light intensity. If 2mm of useful depth is available (this will depend on the actual material used), 1000 separate layers could be formed.

Although the invention has been described with respect to particular embodiments and applications, it will be apparent to one skilled in the art how the method and apparatus of the invention can be modified or adapted to a variety of other applications.

## Claims

1. An optical device (20) for mapping features in a target (38) which are related to the depth at which reflection from the target surface (38) occurs, at a depth resolution in the picometer-to-nanometer range, comprising:
a stable-resonator laser (22) having a resonator cavity (26), for use in producing an emitted coherent output light beam (24,32);
means (36) for focusing said output beam onto the target substantially in a plane where such features are present;
means (40) for moving the focused output beam relative to the target surface (38) in a defined pattern;
means (44) for measuring the power of a light beam (34); and
processing means (50) operatively connected to said moving means (40) and said measuring means (44) for converting time- and position- dependent changes in the measured power of said light beam to position-dependent displacements in the depths at which reflection occurs on the target surface (38); characterised in that
the optical device is arranged to allow coherent light reflected from the target surface (38) to enter the laser cavity (26);
the measuring means (44) is arranged to measure the power of said output beam such that, in use, the processing means (50) converts time- and position- dependent changes in the measured power of said output beam.

2. The device of claim 1, which further includes a beam splitter (30) for splitting a portion of the output beam (24) into a secondary beam (34), and said means (44) for measuring the power of the output beam is designed to measure the power of said secondary beam (34).

3. The device of claim 1 or 2, wherein said moving means (40) includes means (134) for rotating the target surface (128) at a selected speed, and means (138,148) for mcving said output beam (126) to selected positions along a radial axis (135) of the target surface (128), when the target (128) is rotated by the rotating means (134).

4. The device of claims 1 or 2, for use in examining differences in the reflective properties over the target surface (38), further including means for adjusting, at each of different target surface positions, the distance between the target surface position and focusing means (36) for detecting a minimum and a maximum in output beam power, said processing means (50) being effective to convert the differences in the measured power between the minimum and the maximum to a reflectance value for the respective target surface position.

5. The device of claim 1, 2 or 4, wherein said means (44) for measuring the power of said output beam includes a matrix (80) of photodetectors (82) effective to measure differences in the power of different cross-sectional regions of the output beam.

6. An optical data storage system for retrieving digital information, comprising:
an optical data disc (128) having a substrate whose surface defines a plurality of data-storage positions; and
a device according to claim 1, 2 or 3 wherein said focusing means (36) is arranged to focus said output beam onto the surface of said disc;
the disc (128) further comprising, at each data-storage position (130) on the surface of said substrate, reflecting means effective to reflect the focused coherent beam directed against said position (130) from a selected one of I = 2^{N} submicron displacement distances normal to the surface of the substrate, where I is an integer greater than 2, corresponding to a selected one of I = 2^{N} information states, back into the laser cavity; and wherein
said moving means (138,148) is arranged to move the focused output beam relative to the disc surface to selected data-storage positions thereon, at successive, known times, and
said processing means (158) is arranged for converting time-dependent changes in the measured power of said output beam to position-dependent displacement distances at the selected data-storage sites.

7. An optical data storage system for retrieving digital information comprising a device according to claim 1, 2 or 3 for use with an optical data storage disc having a substrate having a surface defining a plurality of data-storage positions with,
at each data-storage position, reflecting means effective to reflect a focused coherent beam, when the same is directed against said position, from a selected one of I = 2^{N} submicron displacement distances normal to the surface of the substrate, corresponding to a selected one of I = 2^{N} information states, where I > 2; and wherein
said moving means (138,148) is arranged to move the focused output beam relative to a disc surface to selected data-storage positions thereon, at successive, known times, and
said processing means (158) is arranged for converting time-dependent changes in the measured power of said output beam to position-dependent displacement distances at the selected data-storage sites, for determining the selected one of the I = 2^{N} information states stored at each such site.

8. The system of claim 6, wherein said reflecting means includes, at each of said data-storage positions, a cavity formed in the substrate and having a selected depth of one of the I = 2^{N} submicron distances below the substrate surface.

9. The system of claim 6, wherein said reflecting means includes, at each of said data-storage positions, a projection on the substrate having a selected height of one of the I = 2^{N} submicron distance above the substrate surface.

10. The system of claim 6 wherein said disc includes a transparent layer carried on said substrate, said layer has an outer surface which defines said plurality of data-storage positions, and a depth which encompasses said I = 2^{N} submicron distances normal to the surface of the substrate, and said reflecting means includes means at each data-storage position for reflecting said focused light beam from a selected one of the I = 2^{N} depths in said layer.

11. The system of claim 10, wherein said reflecting means includes, at each data-storage position, a cavity formed in said substrate and having a selected depth of one of the I = 2^{N} submicron distances below the outer surface of the layer.

12. The system of claim 11, wherein said reflecting means includes, at each data-storage position, a change in the index of reflection of the material forming said layer at a selected one of the I = 2^{N} submicron depths below the outer surface of said layer.

13. The system of claim 10 wherein said disc includes at least two such transparent layers arranged in a stacked configuration, and said focusing means is operable to focus the output beam onto a selected layer on the disc.

## Patentansprüche

1. Optische Vorrichtung (20) zum Bestimmen von Merkmalen eines Ziels (38), die sich auf die Tiefe beziehen, in der Reflexion von der Zieloberfläche (38) stattfindet, und zwar bei einer Tiefenauflösung im Picometer-bis-Nanometer-Bereich, umfassend:
- einen Laser mit stabilem Resonator (22) mit einem Resonanzhohlraum (26) zur Verwendung bei der Herstellung eines abgestrahlten, kohärenten Ausgangslichtstrahls (24, 32);
- eine Einrichtung zum Fokussieren des Ausgangsstrahls auf das Ziel im wesentlichen in eine Ebene, in der derartige Merkmale vorhanden sind;
- eine Einrichtung (40) zum Bewegen des fokussierten Ausgangsstrahls in bezug auf die Zieloberfläche (38) gemäß einem definierten Muster;
- eine Einrichtung (44) zum Messen der Leistung eines Lichtstrahls (34); und
- eine Verarbeitungseinrichtung (50), die betriebsfähig mit der Bewegungseinrichtung (40) und der Meßeinrichtung (44) verbunden ist, um zeit- und positionsabhängige Veränderungen in der gemessenen Leistung des Lichtstrahls in positionsabhängige Verschiebungen in die Tiefen, in denen Reflexion an der Zieloberfläche (38) auftritt, zu konvertieren;
dadurch gekennzeichnet, daß
- die optische Vorrichtung dafür ausgelegt ist, daß kohärentes, von der Zieloberfläche (38) reflektiertes Licht in den Laserhohlraum (26) eintreten kann;
- die Meßvorrichtung (44) dafür ausgelegt ist, die Leistung des Ausgangsstrahls derart zu messen, daß beim Gebrauch die Verarbeitungseinrichtung (50) die zeit- und positionsabhängigen Veränderungen in der gemessenen Leistung des Ausgangsstrahls konvertiert.

2. Vorrichtung nach Anspruch 1,
die ferner einen Strahlteiler (30) zum Abteilen eines Abschnitts des Ausgangsstrahls (24) zu einem Sekundärstrahl (34) umfaßt, wobei die Einrichtung (44) zum Messen der Leistung des Ausgangsstrahls dafür ausgelegt ist, die Leistung des Sekundärstrahls (34) zu messen.

3. Vorrichtung nach Anspruch 1 oder 2,
wobei die Bewegungseinrichtung (40) eine Einrichtung (134) zum Drehen der Zieloberfläche (128) mit einer ausgewählten Geschwindigkeit und Einrichtungen (138, 148) zum Bewegen des Ausgangsstrahls (126) zu ausgewählten Positionen längs der Radialachse (135) der Zieloberfläche (126), wenn das Ziel (128) durch die Dreheinrichtung (134) gedreht wird, umfaßt.

4. Vorrichtung nach Anspruch 1 oder 2,
zur Verwendung bei der Untersuchung von Unterschieden der Reflexionseigenschaften der Zieloberfläche (38), die ferner Einrichtungen zum Einstellen, an jeder der verschiedenen Zieloberflächenpositionen, des Abstands zwischen der Zieloberflächenposition und der Fokussiereinrichtung (36) zum Ermitteln eines Minimums und eines Maximums der Ausgangsstrahlleistung umfaßt, wobei die Verarbeitungseinrichtung (50) so arbeitet, daß die Unterschiede in der gemessenen Leistung zwischen dem Minimum und dem Maximum in einen Reflexionsgradwert für die entsprechende Zieloberflächenposition konvertiert werden.

5. Vorrichtung nach Anspruch 1, 2 oder 4,
wobei die Einrichtung (44) zum Messen der Leistung des Ausgangsstrahls eine Matrix (80) von Photodetektoren (82) umfaßt, die so arbeiten, daß Unterschiede in der Leistung verschiedener Querschnittsbereiche des Ausgangsstrahls gemessen werden.

6. Optisches Datenspeicherungssystem zum Auslesen digitaler Informationen, umfassend:
- eine optische Datenplatte (128), die ein Substrat aufweist, dessen Oberfläche eine Vielzahl von Datenspeicherplätzen definiert; und
- eine Vorrichtung nach Anspruch 1, 2 oder 3, wobei die Fokussiereinrichtung (36) dafür ausgelegt ist, den Ausgangsstrahl auf die Oberfläche der Platte zu fokussieren;
- wobei die Platte (128) ferner an jedem Datenspeicherplatz (130) auf der Oberfläche des Substrats Reflexionseinrichtungen umfaßt, die so arbeiten, daß der fokussierte, kohärente Strahl, der auf den Platz (130) gerichtet ist, von einem ausgewählten der im Submikronbereich liegenden I = 2^{N} Verschiebungsabstände normal zur Oberfläche des Substrats zurück in den Laserhohlraum reflektiert wird, wobei I eine ganze Zahl ist, die größer als 2 ist, entsprechend einem der ausgewählten I = 2^{N} Informationszustände, und wobei
- die Bewegungseinrichtung (138, 148) dafür ausgelegt ist, den fokussierten Ausgangsstrahl relativ zur Plattenoberfläche zu darauf befindlichen, ausgewählten Datenspeicherplätzen in aufeinanderfolgenden, bekannten Zeitabständen zu bewegen, und
- die Verarbeitungseinrichtung (158) dafür ausgelegt ist, die zeitabhängigen Veränderungen in der gemessenen Leistung des Ausgangsstrahls in positionsabhängige Verschiebungsabstände an den ausgewählten Datenspeicherplätzen zu konvertieren.

7. Optisches Datenspeicherungssystem zum Auslesen digitaler Informationen umfassend eine Vorrichtung nach Anspruch 1, 2 oder 3 zur Verwendung mit einer optischen Datenspeicherplatte mit einem Substrat, das eine Oberfläche aufweist, die eine Vielzahl von Datenspeicherplätzen definiert, mit
- an jedem Datenspeicherplatz vorgesehenen Reflexionseinrichtungen, die so arbeiten, daß ein fokussierter, kohärenter Strahl, wenn dieser auf den Platz gerichtet ist, von einem ausgewählten der im Submikronbereich liegenden I = 2^{N} Verschiebungsabstände normal zur Oberfläche des Substrats reflektiert wird, entsprechend einem der ausgewählten I = 2^{N} Informationszustände, wobei I > 2, und wobei
- die Bewegungseinrichtung (138, 148) dafür ausgelegt ist, den fokussierten Ausgangsstrahl in bezug auf eine Plattenoberfläche zu darauf befindlichen, ausgewählten Datenspeicherplätzen in aufeinanderfolgenden, bekannten Zeitabständen zu bewegen, und
- die Verarbeitungseinrichtung (158) dafür ausgelegt ist, zeitabhängige Veränderungen in der gemessenen Leistung des Ausgangsstrahls in positionsabhängige Verschiebungsabstände an den ausgewählten Datenspeicherplätzen zu konvertieren, um den ausgewählten der I = 2^{N} Informationszustände, der an jedem derartigen Platz gespeichert ist, zu bestimmen.

8. System nach Anspruch 6,
wobei die Reflexionseinrichtung an jedem der Datenspeicherplätze einen im Substrat ausgeformten Hohlraum umfaßt, der eine ausgewählte Tiefe eines der im Submikronbereich liegenden I = 2^{N} Abstände unterhalb der Substratoberfläche aufweist.

9. System nach Anspruch 6,
wobei die Reflexionseinrichtung an jedem der Datenspeicherplätze einen auf dem Substrat befindlichen Vorsprung umfaßt, der eine ausgewählte Höhe eines der im Submikronbereich liegenden I = 2^{N} Abstände oberhalb der Substratoberfläche aufweist.

10. System nach Anspruch 6,
bei dem die Platte eine transparente, auf dem Substrat getragene Schicht umfaßt, wobei die Schicht eine Außenfläche, die die Vielzahl von Datenspeicherplätzen definiert, und eine Tiefe aufweist, die die im Submikronbereich liegenden I = 2^{N} Abstände normal zur Oberfläche des Substrats einschließt, wobei die Reflexionseinrichtung an jedem Datenspeicherplatz Einrichtungen zum Reflektieren des fokussierten Lichtstrahls von einer ausgewählten der I = 2^{N} Tiefen in der Schicht umfaßt.

11. System nach Anspruch 10,
wobei die Reflexionseinrichtung an jedem Datenspeicherplatz einen im Substrat ausgeformten Hohlraum umfaßt, der eine ausgewählte Tiefe eines der im Submikronbereich liegenden I = 2^{N} Abstände unterhalb der Außenfläche der Schicht aufweist.

12. System nach Anspruch 11,
wobei die Reflexionseinrichtung an jedem Datenspeicherplatz eine Veränderung im Reflexionsindex des die Schicht bildenden Materials an einer ausgewählten der im Submikronbereich liegenden I = 2^{N} Tiefen unterhalb der Außenfläche der Schicht umfaßt.

13. System nach Anspruch 10,
wobei die Platte zumindest zwei derartige transparente Schichten in übereinander angeordneter Ausgestaltung umfaßt, wobei die Fokussiereinrichtung so betreibbar ist, daß der Ausgangsstrahl auf eine ausgewählte Schicht auf der Platte fokussiert wird.

## Revendications

1. Dispositif optique (20) pour cartographier dans une cible (38) des caractéristiques qui sont reliées à la profondeur à laquelle se produit une réflexion de la surface cible (38), avec une définition de profondeur dans la fourchette du picomètre au nanomètre, qui comprend :
un laser à résonateur stable (22), comportant une cavité de résonance (26), à utiliser pour produire un faisceau lumineux de sortie (24, 32), cohérent,
- un moyen (36) pour focaliser ledit faisceau de sortie sur la cible, sensiblement dans un plan où se trouvent ces caractéristiques,
- un moyen (40) pour déplacer le faisceau de sortie focalisé par rapport à la surface cible (38) selon un schéma défini,
- un moyen (44) pour mesurer la puissance d'un faisceau lumineux (34), et
- un moyen de traitement (50) couplé opérationnellement audit moyen de déplacement (40) et audit moyen de mesure (44) pour convertir des variations, dépendantes du temps et de la position, de la puissance mesurée dudit faisceau lumineux en des déplacements, dépendants de la position, dans les profondeurs auxquelles se produit la réflexion sur la surface cible (38),
caractérisé en ce que :
le dispositif optique est conçu pour laisser la lumière cohérente réfléchie par la surface cible (38) entrer dans la cavité laser (36),
le moyen de mesure (44) est conçu pour mesurer la puissance dudit faisceau de sortie de telle sorte que, en service, le moyen de traitement (50) convertit les variations, dépendantes de la position et du temps, de la puissance mesurée dudit faisceau de sortie.

2. Dispositif selon la revendication 1, qui comprend en outre un diviseur de faisceau (30) pour séparer une partie du faisceau de sortie (24) en un faisceau secondaire (34), et ledit moyen (44) de mesure de la puissance du faisceau de sortie est conçu pour mesurer la puissance dudit faisceau secondaire (34).

3. Dispositif selon la revendication 1 ou 2, dans lequel ledit moyen de déplacement (40) comprend un moyen (134) pour faire tourner la surface cible (128) à une vitesse choisie, et des moyens (138, 148) pour déplacer ledit faisceau de sortie (126) vers des positions choisies le long d'un axe radial (135) de la surplace cible (128) quand le moyen de rotation (134) fait tourner la cible (128).

4. Dispositif selon la revendication 1 ou 2, à utiliser pour examiner des différences des propriétés de réflexion sur la surface cible (38), comprenant en outre un moyen pour ajuster, pour chacune des différentes positions de la surface cible, la distance entre la position de la surface cible et le moyen de focalisation (36) afin de détecter un minimum et un maximum de la variation du faisceau lumineux de sortie, ledit moyen de traitement (50) servant à convertir les différences de la puissance mesurée entre le minimum et le maximum en une valeur du pouvoir de réflexion pour la position correspondante de la surface cible.

5. Dispositif selon la revendication 1, 2 ou 4, dans lequel ledit moyen (44) de mesure de la puissance dudit faisceau de sortie comprend une matrice (80) de photodétecteurs (82) servant à mesurer des différences dans la puissance de différentes régions en coupe transversale du faisceau de sortie.

6. Système optique de stockage de données servant à retrouver une information numérique, comprenant :
- un disque (128) de données optique qui comprend un substrat dont la surface définit une pluralité de positions de stockage de données, et
- un dispositif selon la revendication 1, 2 ou 3, dans lequel ledit moyen de focalisation (36) est conçu pour focaliser ledit faisceau de sortie sur la surface dudit disque,
le disque (128) comprenant en outre, en chaque position (130) de stockage de données sur la surface dudit substrat, un moyen réfléchissant servant à réfléchir le faisceau cohérent focalisé dirigé sur ladite position (130) depuis une distance choisie parmi I= 2^{N} distances submicroniques de déplacement normales à la surface du substrat, I étant un nombre entier supérieur à 2, correspondant à un état choisi parmi I = 2^{N} états d'information, et le renvoyer dans la cavité laser, et dans lequel :
ledit moyen de déplacement (138, 148) est conçu pour déplacer le faisceau de sortie focalisé par rapport à la surface du disque vers des positions choisies de stockage de données sur ce dernier, à des instants successifs connus, et
ledit moyen de traitement (158) est conçu pour convertir des variations, dépendantes du temps, de la puissance mesurée dudit faisceau de sortie en des distances de déplacement, dépendantes de la position, au niveau des sites choisis de stockage de données.

7. Système optique de stockage de données servant à retrouver une information numérique, comprenant un dispositif selon la revendication 1, 2 ou 3 à utiliser avec un disque optique de stockage de données comprenant un substrat avec une surface qui définit une pluralité de positions de stockage de données, avec :
en chaque position de stockage de données, un moyen réfléchissant efficace pour réfléchir un faisceau cohérent focalisé, quand celui-ci est dirigé vers ladite position, depuis une distance sélectionnée parmi I= 2^{N} distances submicroniques de déplacement normales à la surface du substrat, correspondant à un état choisi parmi I = 2^{N} états d'information, avec I > 2
et dans lequel ledit moyen de déplacement (138, 148) est conçu pour déplacer le faisceau de sortie focalisé par rapport à la surface du disque vers des positions choisies de stockage de données sur ce dernier, à des instants successifs connus, et
ledit moyen de traitement (158) est conçu pour convertir des variations, dépendantes du temps, de la puissance mesurée dudit faisceau de sortie en des distances de déplacement, dépendantes de la position, au niveau des sites choisis de stockage de données, pour déterminer celui sélectionné des I = 2^{N} états d'information stockés en chacun de ces sites.

8. Système selon la revendication 6, dans lequel ledit moyen de réflexion comprend, en chacune desdites positions de stockage de données, une cavité formée dans le substrat et ayant une profondeur choisie parmi l'une des I= 2^{N} distances submicroniques sous la surface du substrat.

9. Système selon la revendication 6, dans lequel ledit moyen de réflexion comprend, en chacune desdites positions de stockage de données, une saillie formée sur le substrat et ayant une hauteur choisie parmi l'une des I= 2^{N} distances submicroniques au-dessus de la surface du substrat.

10. Système selon la revendication 6, dans lequel ledit disque comprend une couche transparente portée par ledit substrat, ladite couche ayant une surface extérieure qui définit ladite pluralité de positions de stockage de données et une profondeur qui englobe lesdites I= 2^{N} distances submicroniques normales à la surface du substrat, et ledit moyen de réflexion comprend un moyen, en chaque position de stockage de données, pour réfléchir ledit faisceau lumineux focalisé depuis l'une sélectionnée des I= 2^{N} profondeurs dans ladite couche.

11. Système selon la revendication 10, dans lequel ledit moyen de réflexion comprend, en chacune desdites positions de stockage de données, une cavité formée dans le substrat et ayant une profondeur choisie de l'une des I=2^{N} distances submicroniques au-dessous de la surface extérieure de la couche.

12. Système selon la revendication 11, dans lequel ledit moyen de réflexion comprend, en chacune desdites positions de stockage de données, une modification de l'indice de réflexion du matériau formant ladite couche en l'une sélectionnée des I= 2^{N} profondeurs submicroniques au-dessous de la surface extérieure de la couche.

13. Système selon la revendication 10, dans lequel ledit disque comprend au moins deux telles couches transparentes disposées selon une configuration empilée, et ledit moyen de focalisation est capable de focaliser le faisceau de sortie sur une couche sélectionnée du disque.
